# EUROPÄISCHE PATENTSCHRIFT

(11) **EP 1 904 718 B1**
(45) Veröffentlichungstag und Bekanntmachung des Hinweises auf die Patenterteilung: **12.12.2012**
(21) Anmeldenummer: 06777647.6
(22) Anmeldetag: 07.07.2006
(51) Int. Cl.: F01D 25/26

(54) **KOMBINIERTE DAMPFTURBINE**
COMBINED STEAM TURBINE
TURBINE À VAPEUR COMBINÉE

(30) Priorität: 14.07.2005 EP 05015348
(43) Veröffentlichungstag der Anmeldung: 02.04.2008
(73) Patentinhaber: SIEMENS AKTIENGESELLSCHAFT, 80333 München (DE)
(72) Erfinder: WIEGHARDT, Kai, 44869 Bochum (DE)
(86) Internationale Anmeldenummer: PCT/EP2006/064017
(87) Internationale Veröffentlichungsnummer: WO 2007/006754

(56) Entgegenhaltungen:
- EP-A- 0 965 732
- WO-A-01/02702
- DE-A1- 3 506 538
- GB-A- 846 432
- US-A- 5 149 247
- US-A- 5 350 276

## Beschreibung

Die Erfindung betrifft eine kombinierte Dampfturbine mit einem Hochdruckmodul und einem Mitteldruckmodul in einem beiden Modulen gemeinsamem Gehäuse, wobei das Gehäuse ein zwei Expansionsstrecken umfassendes Innengehäuse und ein das Innengehäuse umfassendes Außengehäuse aufweist, und wobei das Innengehäuse durch mit Fügemittel zusammengefügte Teile gebildet ist. Die Erfindung betrifft weiter eine Dampf- oder Gas- und Dampfturbinenanlage mit einer kombinierten Dampfturbine.

Zur Erreichung immer höherer Wirkungsgrade geht man bei Dampfturbinen inzwischen dazu über, Arbeitsmedium in Form von Heißdampf bei überkritischen Dampfparametern einzusetzen, d. h. Dampf mit einer Temperatur über 374,1 °C und über 221,3 bar. Üblicherweise weist überkritischer Heißdampf Drücke jenseits von 240 bar auf, bei Temperaturen oberhalb von 560 °C. Die Dampftemperaturen der dazugehörigen Mitteldruck-Expansion liegen üblicherweise noch 10 K bis 30 K darüber, bei Drücken von ca. 40 bar bis 70 bar.

Zur Beaufschlagung mit überkritischem Heißdampf eignen sich bekanntermaßen prinzipiell so genannte Hochdruckdampfturbinen, die hinsichtlich ihrer Materialeigenschaft, ihrer Konstruktion und ihrer Bauweise entsprechend ausgelegt sind. Zur Erzielung hoher Wirkungsgrade sind insbesondere Hochdruckdampfturbinen in einer so genannten Topfbauweise geeignet. Diese weisen ein Innengehäuse und ein Außengehäuse auf, wobei das Innengehäuse eine Expansionsstrecke umfasst und damit höchsten Heißdampfparametern ausgesetzt ist, andererseits aber auch in einem zwischen Außengehäuse und Innengehäuse liegenden Raum von außen zusammengepresst und gekühlt werden kann.

Einschalige Bauweisen für Dampfturbinen haben sich dagegen als weniger geeignet im überkritischen Bereich erwiesen, da ein einziges drucktragendes Gehäuse nicht ausreichend sicher und beständig gegen die hohen Drücke und Temperaturen im überkritischen Bereich verschließbar ist. Vor allem mangelt es an martensitischen Stählen, z. B. für die Schrauben, die eine ausreichende Festigkeit auch jenseits von 580 °C haben. Zudem ist die Ausbildung von thermisch ausreichend trägen Auengehäusen in der Regel mit einem zu hohen Kostenaufwand verbunden.

Thermische Maschinen mit Fügemitteln sind in den Dokumenten GB 946 432, DE35 06 538, US-A-5,149,247, US-A-5,350,276, WO 01/02702 und EP -A-0 965 732 offenbart.

Wünschenswert wäre eine kombinierte Dampfturbine, die für den überkritischen Bereich geeignet ist.

An dieser Stelle setzt die Erfindung an, deren Aufgabe es ist, eine kombinierte Dampfturbine der eingangs genannten Art so auszubilden, dass sie für überkritische Dampfzustände einsetzbar ist und dabei insbesondere ein Gehäuse mit ausreichend sicherer und beständiger Schließwirkung für überkritische Heißdampfzustände aufweist.

Die Erfindung betreffend die Dampfturbine wird gelöst durch eine kombinierte Dampfturbine gemäß Anspruch 1.

Der Begriff "Modul" bezeichnet ganz allgemein für unterschiedliche Beaufschlagungsparameter vorgesehene Teile einer kombinierten Dampfturbine, ohne dass der Begriff "Modul" eine baulich modulare Einheit implizieren müsste.

Die Erfindung geht dabei von der Überlegung aus, dass sich eine kombinierte Dampfturbine mit einem Hochdruckmodul und einem Mitteldruckmodul und einem beiden Modulen gemeinsamen Gehäuse nur dann für den überkritischen Dampfzustand eignet, wenn sie zweischalig aufgebaut ist. Die Erfindung geht deshalb von einer eingangs genannten kombinierten Dampfturbine aus, wobei das Gehäuse ein eine Expansionsstrecke umfassendes Innengehäuse und ein das Innengehäuse umfassendes Außengehäuse aufweist. Dies hat nämlich den Vorteil, dass das Innengehäuse gekühlt werden kann. Dies wiederum führt dazu, dass ein druckhaltendes Außengehäuse im Vergleich zu einem einzigen (einschaligen) Außengehäuse keinen so hohen thermischen Beanspruchungen ausgesetzt ist. In der zweischaligen Bauweise muss ein Außengehäuse also nicht notwendigerweise vollständig hinsichtlich einer überkritischen Heißdampfbeaufschlagung ausgelegt sein.

Die oben genannte zweischalige Bauweise von Gehäusen eignet sich aufgrund der Kühlmöglichkeit in besonderem Maße für die Realisierung von kombinierten Dampfturbinen auch im überkritischen Bereich. Eine naive unreflektierte Aggregation einer Hochdruckturbine mit einer Mitteldruckturbine führt jedoch nicht zur Ausbildung einer kombinierten Dampfturbine im überkritischen Bereich. Vielmehr ist es wünschenswert auch das zweischalige Gehäuse einer für den überkritischen Bereich geeigneten kombinierten Dampfturbine mit einer verbesserten Schließwirkung gegenüber Heißdampfparametern im überkritischen Bereich, insbesondere mit einem verbesserten Druckhaltevermögen, auszugestalten.

Es ist hinsichtlich des Innengehäuses, das üblicherweise durch mit Fügemittel zusammengefügte Teile gebildet ist, notwendig, im Hochdruckmodul und/oder im Mitteldruckmodul zur Unterstützung der Fügemittel, weitere Druckmittel zum Zusammendrücken der Teile des Innengehäuses vorzusehen. Üblicherweise sind beim Innengehäuse Fügemittel wie Schrauben oder Bolzen vorgesehen, die das Innengehäuse entlang einer üblicherweise horizontal verlaufenden Teilfuge an Flanschen zusammenhält. Um diese Fügemittel zur Erreichung einer auch bei überkritischen Dampfzuständen ausreichend sicheren und beständigen Schließwirkung zu ergänzen, sind weitere Druckmittel zum Zusammendrücken der Teile des Innengehäuses notwendig. Dies macht nämlich gerade im überkritischen Heißdampfbereich bestehende Wirkungsgradnachteile bei einer kombinierten Dampfturbine weitgehend wett. Selbst überkritische Heißdampfzustände werden ökonomisch und sicher gehandhabt.

Das Außengehäuse könnte beispielsweise als ein so genanntes GGG-Außengehäuse ausgebildet sein, d. h. aus einem Eisen-/Grauguss mit globularem Grafitanteil. Das Innengehäuse ist vorzugsweise gekühlt und dessen thermisch hochbelastete Bereiche sind vorzugsweise aus einem hochwarmfesten Stahl, z. B. einem 1-%-Cr- oder 10-%-Cr-Stahl oder einem Superalloy-Werkstoff, z. B. einem auf Nickel- oder Kobaltbasis gebildeten Werkstoff, beispielsweise A617, gebildet.

Es ist vorgesehen, einen im Hochdruckmodul und/oder Mitteldruckmodul zwischen Außengehäuse und Innengehäuse liegenden Raum zur Bildung des Druckmittels zu nutzen, nämlich indem im Betriebszustand der Raum mit hochgespanntem Dampf beaufschlagt wird, d. h. mit Dampf dessen Druck höher ist als in mindestens einer Einströmöffnung für mindestens eine der zwei Expansionsstrecken. Ein solcher zwischen Außengehäuse und Innengehäuse liegender Raum kann insbesondere ein für das Mitteldruckmodul und das Hochdruckmodul gemeinsam bestehender Raum sein. Für das Mitteldruckmodul und für das Hochdruckmodul liegen weitestgehend getrennte Räume vor, die ggf. im Rahmen von Weiterbildungen dieser Variante miteinander verbunden sein können.

Unter hochgespanntem Dampf wird ein Dampf verstanden, der mindestens einen höheren Druck aufweist, als ein sich in der Expansionsstrecke befindlicher Dampf des jeweiligen Moduls. Auf diese Weise wird auf die Teile des Innengehäuses eine zusätzliche von außen wirkende Presswirkung erreicht, die dazu führt, dass die Teile des Innengehäuses durch den hochgespannten Dampf als Druckmittel zusammengedrückt werden.

Der hochgespannte Dampf ist in Form von Kühldampf gebildet und der Raum ist in Form eines zwischen Außengehäuse und Innengehäuse liegenden Kühlraumes gebildet.

Der Raum ist mit einer Zuführleitung für hochgespannten Dampf verbunden und mit einem gegen unmittelbar aus der Expansionsstrecke austretenden Dampf dichtenden Trennmittel verschlossen. Damit wird die Druck- und ggf. auch die Kühlwirkung des mit hochgespanntem Dampf beaufschlagten Raums auf die Teile des Innengehäuses zweckmäßig verbessert.

Das Außengehäuse ist axial geteilt, d. h. das Außengehäuse weist insbesondere eine Teilfuge auf, die im Wesentlichen in einer zur Längsachse quer orientierten Ebene verläuft. Insbesondere eignet sich hier eine Topfbauweise, die anhand der Zeichnung näher erläutert ist. Weitere vorteilhafte Weiterbildungen der ersten Variante sind den weiteren Unteransprüchen zu entnehmen und im Rahmen bevorzugter Ausführungsformen anhand der Zeichnung im Detail beispielhaft beschrieben.

Gemäß der Erfindung ist das Druckmittel in Form von um die Teile des Innengehäuses aufgeschrumpften Schrumpfringen gebildet. Zusätzlich zu den bereits vorliegenden Fügemitteln, wie Schrauben, Bolzen oder Flansche, vermögen so genannte Schrumpfringe einen noch darüber hinausgehenden wesentlich höheren Druck auf die Teile des Innengehäuses auszuüben, so dass auch gemäß der Erfindung eine ausreichend sichere und beständige Schließwirkung für das Innengehäuse erreicht werden kann. Bei der Erfindung kann auf ein Druckmittel ggf. verzichtet werden - grundsätzlich können die Druckmittel jedoch kombiniert werden.

Insbesondere erweist es sich als vorteilhaft, ggf. für ultrasuperkritische Dampfzustände, beide Varianten in Kombination vorzusehen.

Gemäβ der Erfindung sind desweiteren das Hochdruck-Modul und das Mitteldruck-Modul durch eine auf dem Schrumpfring angeordnete Kolbenringdichtung voneinander getrennt.

In einer bevorzugten Weiterbildung der Erfindung ist das Außengehäuse vorzugsweise horizontal geteilt und weist insbesondere eine Teilfuge im Wesentlichen in einer zur Längsachse parallel orientierten Ebene auf. Gleiches gilt vorteilhafterweise bei der Erfindung für das Innengehäuse.

Die Erfindung führt auch auf eine Dampf- oder Gas- und Dampf-turbinenanlage (GuD-Anlage) mit einer kombinierten Dampfturbine der oben erläuterten Art und einer Dampfturbinenperipherie mit einer Anzahl von Leitungs- und/oder Sammelkomponenten, die zur Beaufschlagung mit Dampf bei überkritischen Dampfzuständen ausgelegt sind.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verweisen. Im Einzelnen zeigt die Zeichnung in:
- FIG 1: eine erste Ausführungsform einer kombinierten Hochdruck-/Mitteldruckdampfturbine gemäß dem Stand der Technik;
- FIG 2: eine zweite Ausführungsform einer kombinierten Hochdruck-/Mitteldruckdampfturbine gemäß dem Stand der Technik;
- FIG 3: eine dritte Ausführungsform einer kombinierten Hochdruck-/Mitteldruckdampfturbine gemäß dem Stand der Technik;
- FIG 4: eine Ausführungsform einer Hochdruck-/Mitteldruckdampfturbine gemäß der Erfindung.

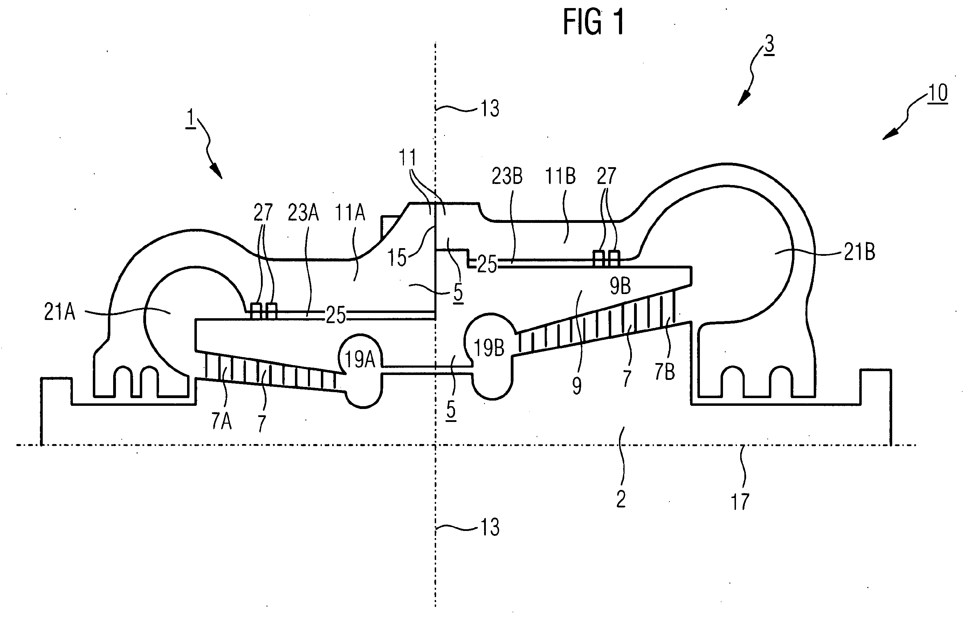

FIG 1 zeigt eine kombinierte Dampfturbine 10 mit einem Hochdruckmodul 1 und einem Mitteldruckmodul 3 in einem beiden Modulen 1, 3 gemeinsamen Gehäuse 5. Das Gehäuse 5 weist dabei ein eine Expansionsstrecke 7 umfassendes Innengehäuse 9 und ein das Innengehäuse 9 umfassendes Außengehäuse 11 auf. Vorliegend weist das Außengehäuse 11 einen Hochdruckteil 11A und einen Mitteldruckteil 11B auf, die beide in einer Topfbauweise gebildet sind und die axial geteilt sind, d. h. sie sind in einer durch die Linie 13 angedeuteten Ebene aneinander gefügt. Eine Teilfuge 15 verläuft im Wesentlichen in der durch die Linie 13 angedeuteten Ebene. Dieses Ebene ist im Wesentlichen quer zur Längsachse 17 der kombinierten Dampfturbine 10 orientiert.

Betrachtet man jedes Modul 1, 3 für sich in einer um 90° gedacht gedrehten Ansicht, so erscheint das Innengehäuse 9 des jeweiligen Moduls wie in einem durch das jeweilige Außengehäuse 11 gebildeten Topf, was den Namen "Topfbauweise" motiviert.

In der vorliegenden Ausführungsform ist das Hochdruckmodul 1 zur Beaufschlagung der Expansionsstrecke 7A in einem Innengehäuse 9 im Modul 1 mit Dampf bei überkritischen Dampfzuständen ausgelegt. Frischdampf in diesen Dampfzuständen wird im Hochdruckteil 1 über eine Einströmung 19A der Hochdruckexpansionsstrecke 7A zugeführt. Der Frischdampf wird der Einströmung 19A aus einem Kessel bzw. einem Frischdampfüberhitzer im überkritischen Dampfzustandsbereich zugeleitet, was in der FIG 1 nicht im Detail gezeigt ist. Der Frischdampf entspannt sich bis zum Abströmbereich 21A, der als eine torusförmige Kammer gebildet ist, auf Dampfzustände unterhalb des überkritischen Heißdampfbereichs. Von dort aus wird der Abdampf über einen Stutzen einem Kessel zur Zwischendampfüberhitzung zugeleitet, was in der FIG 1 nicht im Einzelnen gezeigt ist.

Ähnlich wird im Mitteldruckteil Dampf aus der oben genannten oder einen anderen Zwischendampfüberhitzung einer Einströmung 19B zugeleitet, entspannt sich im Expansionsbereich 7B und gelangt in den Abströmbereich 21B, der ebenfalls als eine torusförmige Kammer ausgebildet ist.

Im Bereich der Einströmungen 19A, 19B und der Expansionsstrecken 7A, 7B wirkt ein Innendruck auf das Innengehäuse 9, der die Tendenz hat, das obere Teil 9A und das nicht gezeigte, spiegelbildlich zur Achse 17 verlaufende untere Teil auseinander zu drücken. Dem wirken die in der FIG 1 nicht im Einzelnen dargestellten Fügemittel entgegen, die das obere Teil 9A und das nicht gezeigte, spiegelbildlich zur Achse 17 verlaufende untere Teil zusammenpressen. Das Innengehäuse 9 ist in der vorliegenden Ausführungsform horizontal geteilt und durch mit Fügemittel zusammengefügte Teile gebildet, nämlich dem Oberteil 9A und dem nicht gezeigten Unterteil. Die Fügemittel sind im Einzelnen nicht gezeigt. Als Fügemittel werden insbesondere Schrauben und Bolzen verwendet, die über ausreichend stark und groß dimensionierte Flansche das Oberteil 9A und das nicht gezeigte Unterteil des Innengehäuses 9 aneinander pressen.

Es hat sich jedoch gezeigt, dass es für eine ausreichend sichere und beständige Schließwirkung in der Teilfuge zwischen oberem Teil 9A und nicht gezeigtem unteren Teil des Innengehäuses 9 und insbesondere zur Verbesserung des Druckhaltevermögens des Innengehäuses 9 im Rahmen der Beaufschlagung mit Heißdampf im überkritischen Bereich (nämlich bei 19A und 7A) als auch im Mitteldruck-Bereich (nämlich bei 19B und 7B), vorteilhaft ist, das Hochdruckmodul 1 und/oder das Mitteldruckmodul 3 zur Unterstützung der Fügemittel mit weiteren Druckmitteln zum Zusammendrücken der Ober- und Unterteile 9A des Innengehäuses 9 zu versehen.

Im Rahmen der ersten Ausführungsform einer kombinierten Dampfturbine 10 gemäß der FIG 1 wird das Druckmittel in Form eines zwischen dem Außengehäuse 11 und dem Innengehäuse liegenden Raum 23A und 23B erreicht, der im Betriebszustand mit hochgespanntem Dampf 25 beaufschlagt wird, dessen Druck höher ist als in mindestens einer Einströmung 19A, 19B für mindestens eine der zwei Expansionsstrecken 7. Das heißt, das Druckmittel ist in Form von Frischdampf gebildet, der den Raum 23A oder 23B um das Innengehäuse 9 im Bereich der Hochdruck-Expansion 1 füllt. Vorliegend wird der Raum als ein für den Hochdruckteil 1 separater Raum 23A und für den Mitteldruckteil separater Raum 23B gebildet. Mit dem Raum 23A, 23B ist eine Zuführleitung für hochgespannten Dampf 25 verbunden, die nicht im Einzelnen gezeigt ist. Außerdem ist der Raum 23A, 23B gegen unmittelbar aus der Expansionsstrecke 7A, 7B in den Abströmbereich 21A, 21B austretenden Dampf durch ein dichtendes Trennmittel 27 in Form von z. B. Kolbenringdichtungen abgedichtet. Der Raum 23A, 23B kann also über die hier nicht gezeigten Zuführleitungen mit hochgespanntem Dampf beaufschlagt werden und ist aufgrund des Trennmittels gegenüber jedenfalls einem Teil des innenliegenden Bereichs des Innengehäuses 9 druckbeaufschlagt. Der hochgespannte Dampf 25 weist dazu einen höheren Druck auf, als jedenfalls der Heißdampf in der Expansionsstrecke 7A, 7B und der Heißdampf im Abströmbereich 21A, 21B. Das Oberteil 9A und das Unterteil 9B wird durch die Druckbeaufschlagung des Raums 23A, 23B durch hochgespannten Dampf 25 zusätzlich zur Wirkung der Fügemittel zusammengepresst. Dies führt zu einer nachhaltigen Verbesserung des Druckhaltevermögens, denn auf diese Weise wird eine ausreichend sichere und beständige Schließwirkung in der zwischen dem Oberteil 9A und dem nicht gezeigten im Wesentlichen spiegelbildlich zur Achse 17 verlaufenden Unterteil bestehenden Teilfuge erreicht.

Bei der in FIG 1 dargestellten ersten Ausführungsform einer kombinierten Dampfturbine 10 wird hochgespannter Dampf 25 zugeführt, nämlich Frischdampf, der auch im Bereich der Einströmungen 19A und 19B zur Verfügung steht. Dazu wird jedenfalls ein Teil der oben genannten Zuführung als dampfdichte Durchführung zwischen der Einströmungen 19A, 19B und dem Raum 23A, 23B zur Verfügung gestellt.

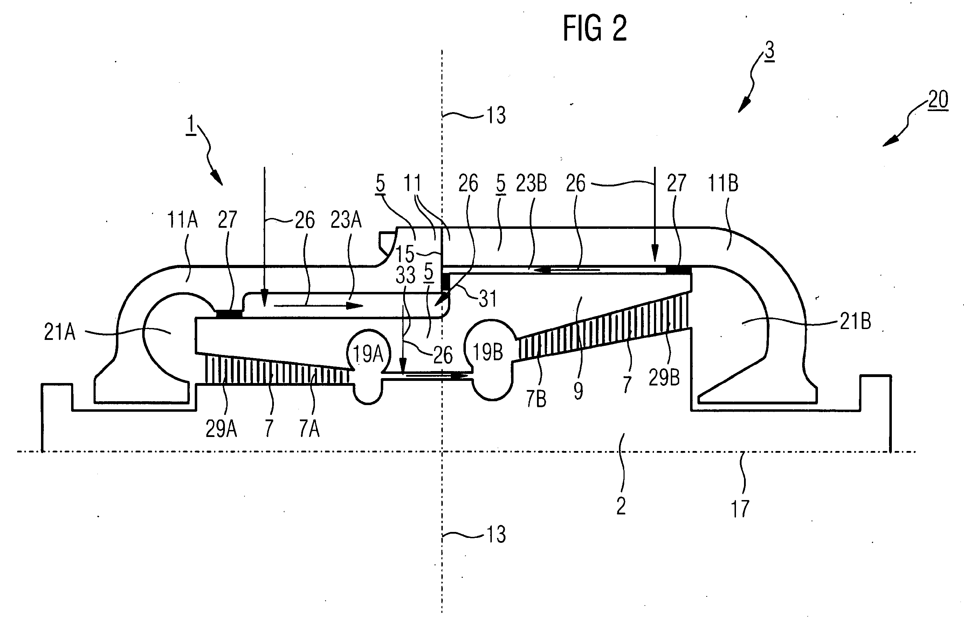

Der hochgespannte Dampf 26 kann ggf. auch aus dem Kessel, aus einer Frischdampf-Überhitzerstufe oder dem Wasserabscheider stammen und weist daher einen höheren Druck und eine geringere Temperatur auf. Dies wird in Bezug auf die FIG 2 erläutert.

FIG 2 zeigt eine zweite Ausführungsform einer kombinierten Dampfturbine 20 die in wesentlichen Merkmalen mit der in FIG 1 gezeigten ersten Ausführungsform übereinstimmt. Dementsprechend wurden gleiche Bezugszeichen für gleiche Teile verwendet.

Im Unterschied zu der in FIG 1 dargestellten Ausführungsform ist bei der vorliegenden kombinierten Dampfturbine 20 der hochgespannte Dampf 26 dem Raum 23A, 23B von extern zugeführt. Der hochgespannte Dampf 26 wird als Kühldampf direkt aus der Frischdampfüberhitzung genommen. Der hochgespannte Dampf 26 wird beispielsweise aus einer im Außengehäuse 11 umlaufenden Kammer dem Raum 23A oder 23B zugeführt, wobei die Kammer von außen mit einem Stutzen angeschlossen ist. Die Kammer und der Stutzen sind hier im Einzelnen nicht gezeigt. Die Kammer und der oben genannte Stutzen sind jeweils im Bereich des Außengehäuses 11A beim Hochdruckmodul und des Außengehäuses 11B beim Mitteldruckmodul im Bereich der Zuführung des hochgespannten Dampfes 26 angeordnet.

Durch die direkte Entnahme des hochgespannten Dampfes 26 aus der Frischdampfüberhitzung wird jedenfalls ein Teil der Frischdampfüberhitzung umgangen, so dass der hochgespannte Dampf etwas kühler als der Frischdampf ist, aber einen höheren Druck als der Frischdampf in der Einströmung 19A, 19B aufweist. Vorliegend hat der hochgespannte Dampf 26 also nicht nur einen höheren Druck als der in der Expansionsstrecke 7A, 7B befindlich Heißdampf, sondern auch einen höheren Druck als der in der Einströmung 19A befindliche Frischdampf. Damit wird eine noch bessere Druckwirkung als bei der in FIG 1 gezeigten Ausführungsform erzielt.

Der hochgespannte Dampf 26 expandiert wie durch die Pfeile im Raum 23A, 23B angedeutet, weiter im Kolben des Hochdruck-Moduls bzw. des Mitteldruck-Moduls und kühlt damit kritische Bereiche des Gehäuses 5, insbesondere des drucktragenden Außengehäuses 11.

Der Raum 23A und 23B können dabei verbunden sein.

Die weitere Führung des hochgespannten Dampfes 26 kann durch radikale Bohrungen 33 im Innengehäuse 9 auf die Welle 2 erfolgen. Diese Bohrungen befinden sich im Wellendichtungsbereich zwischen den Einströmungen, insbesondere nahe 19A. Aufgrund der Druckverhältnisse expandiert der Kühldampf hin zu beiden Einströmungen.

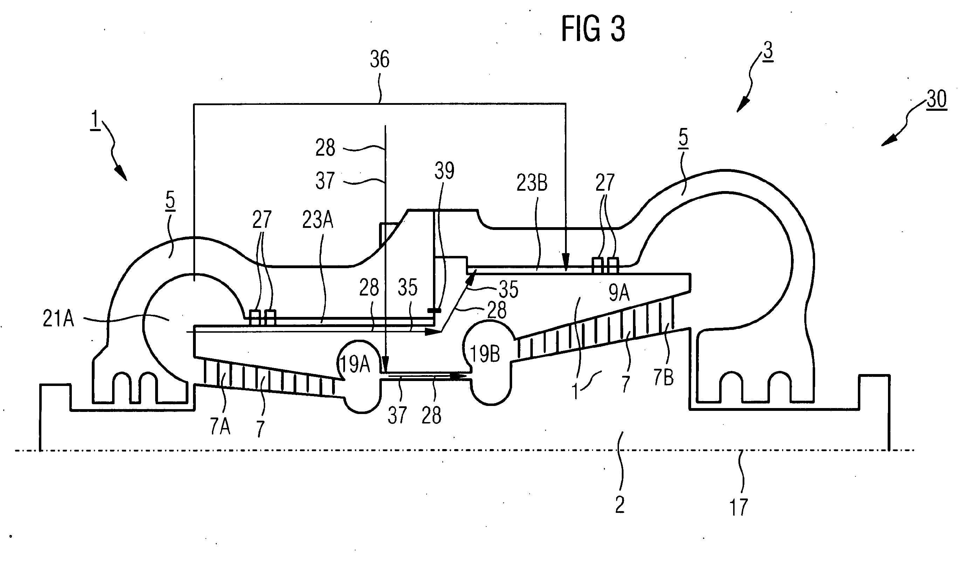

FIG 3 zeigt eine dritte Ausführungsform einer kombinierten Dampfturbine 30, die in ihrer Bauart im Wesentlichen den in den FIG 1 und FIG 2 gezeigten Ausführungsformen ähnelt. Im Unterschied zu den letzteren Ausführungsformen wird als Druckmittel ein Bereich der Mitteldruck-Expansion 3 der Hochdruck-Abdampf der kombinierten Dampfturbine 20 verwendet. Dazu sind die Räume 21A und 23B durch eine Leitung 35 verbunden, die vorteilhaft als interne Leitung durch das Innengehäuse 9 oder als externe Leitung 36 erfolgen kann. Die Räume 23A und 23B sind notwendigerweise durch eine Abdichtung 39 voneinander getrennt.

Weiterhin ist, ähnlich wie in der zweiten Ausführungsform der FIG 2, eine Überschuss- oder Defizitkühlung (Vermischung mit Leckdampf) im Kolben, insbesondere im Bereich der Welle 2, sinnvoll. Deshalb ist, ähnlich wie die Zuführung 33 in der zweiten Ausführungsform 20 der FIG 2, vorliegend eine Zuführung 37 für hochgespannten Dampf 28 in den Bereich der Welle vorgesehen.

Der Raum 23A des Hochdruckmoduls 1 wird also durch hochgespannten Dampf 28 vornehmlich aus einer externen Zuführung 37 beaufschlagt. Dies kann vorzugsweise Kühldampf sein, wie er in der zweiten Ausführungsform der FIG 2 beschrieben wurde, sein. Im Raum 23A des Hochdruckmoduls 1 entspricht der hochgespannte Dampf 28 der kombinierten Dampfturbine 30 im Wesentlichen dem hochgespannten Dampf 26 der zweiten Ausführungsform. Darüber hinaus wird aber betreffend den hochgespannten Dampf 28 im Raum 23B des Mitteldruckmoduls 3 durch die Entnahme aus dem Abströmbereich 21A des Hochdruckmoduls 1 eine Zwischenüberhitzung übergangen. Damit ist der hochgespannte Dampf 28 im Raum 23B des Mitteldruckmoduls kühler als der Dampf aus der Zwischenüberhitzung und weist einen höheren Druck auf, denn der Druckverlust des Kessels der Zwischenüberhitzung wird umgangen. Auf diese Weise befindet sich sowohl im Raum 23A des Hochdruckmoduls 1 als auch im Raum 23B des Mitteldruckmoduls 3 hochgespannter Dampf bei höheren Drücken als Frischdampf im Bereich der Einströmung 19A bzw. Zwischenüberhitzerdampf in der Einströmung 19B und erst recht mit einem höheren Druck als im Bereich der jeweiligen Expansionsstrecke 7A, 7B. Auf diese Weise wird das Oberteil 9A und das Unterteil 9B des Innengehäuses zusätzlich zu den üblicherweise vorgesehenen Fügemitteln zusammengedrückt.

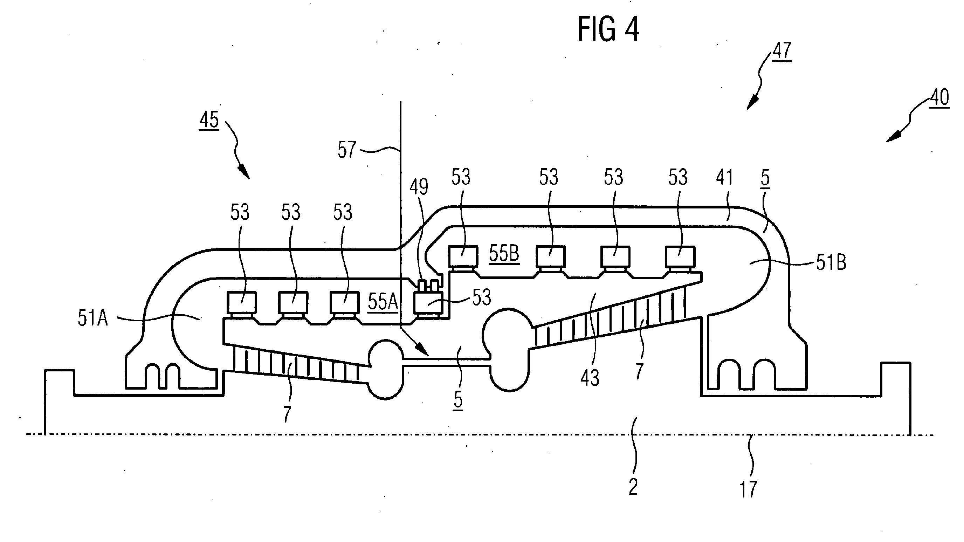

FIG 4 zeigt eine Ausführungsform einer kombinierten Dampfturbine 40 gemäß der Erfindung. Im Unterschied zu den in den FIG 1, FIG 2 und FIG 3 gezeigten Ausführungsformen ist diese Dampfturbine 40 nicht in der Topfbauweise realisiert, d. h. vor allem, dass das Außengehäuse 41 keine Axialteilung aufweist. vielmehr ist das Außengehäuse 41 in einer hier nicht gezeigten Weise, ähnlich wie das Innengehäuse 43, horizontal geteilt. Das Hochdruckmodul 45 und das Mitteldruckmodul 47 der kombinierten Dampfturbine 40 ist durch eine Kolbenringdichtung 49 voneinander getrennt.

Insofern handelt es sich vorliegend weniger um Module als für eine Hochdruckbeaufschlagung bzw. Mitteldruckbeaufschlagung ausgelegte Teile 45, 47 der kombinierten Dampfturbine 40. Diese Teile werden im Folgenden dennoch aufgrund ihrer unterschiedlichen Beaufschlagungsparameter als Module 45, 47 bezeichnet, ohne dass der Begriff "Modul" eine baulich modulare Einheit impliziert.

Die Abströmbereiche 51A im Hochdruckmodul 45 und 51B im Mitteldruckmodul 47 setzen sich auch im Zwischenraum oberhalb des oberen Teils 43A des Innengehäuses 43 fort und sind über die Kolbenringdichtung 49 gegeneinander getrennt. Das Druckmittel wird in Form mehrerer um die Teile des Innengehäuses 43 aufgeschrumpfter Schrumpfringe 53 gebildet. Die Schrumpfringe 53 pressen also zusätzlich die Teile 43A, 43B des Innengehäuses 43 aufeinander.

Die sich in die oberen Bereiche 55A, 55B zwischen Innengehäuse 43 und Außengehäuse 41 fortsetzenden Abströmbereiche 51A, 51B sind also jeweils mit Abdampf aus dem Hochdruckmodul 45 bzw. Abdampf aus dem Mitteldruckmodul 47 beaufschlagt, was so zu einer Kühlung des Innengehäuses 43 führt. Zusätzlich können, ähnlich wie die Zuführungen 33, 37 in FIG 2 und FIG 3, dampfdichte Zuführungen 57 aus der Frischdampf-Überhitzung aus den Bereichen 55A und 55B zum Kolben hin für eine zusätzliche Kühlung der Welle 2 beitragen.

Kombinierte Dampfturbinen weisen ein Hochdruckmodul 1, 45 und ein Mitteldruckmodul 3, 47 in einem beiden Modulen gemeinsamen Gehäuse 5 auf, wobei das Gehäuse 5 ein zwei Expansionsstrecke 7 umfassendes Innengehäuse 9, 43 und ein das Innengehäuse 9, 43 umfassendes Außengehäuse 11, 41 aufweist und wobei das Innengehäuse 9, 43 durch mit Fügemittel zusammengefügte Teile 9A, 43A gebildet ist. Üblicherweise sind kombinierte Dampfturbinen für unterkritische Dampfzustände ausgelegt. Um eine kombinierte Dampfturbine 10, 20, 30, 40 auch für überkritische Dampfzustände nutzen zu können, ist im Unterschied zu üblichen kombinierten Dampfturbinen ein Gehäuse 5 mit einer sicheren und beständigen Schließwirkung versehen.

## Patentansprüche

1. Kombinierte Dampfturbine (10, 20, 30, 40) mit einem Hochdruck-Modul (1, 45) und einem Mitteldruck-Modul (3, 47) in einem beiden Modulen gemeinsamen Gehäuse (5), wobei das Gehäuse (5) ein zwei Expansionsstrecken (7) umfassendes Innengehäuse (9, 43) und ein das Innengehäuse (9, 43) umfassendes Außengehäuse (11, 41) aufweist, und wobei
das Innengehäuse (9, 43) durch mit Fügemittel zusammengefügte Teile (9A, 9B, 43A, 43B) gebildet ist,
wobei das Hochdruck-Modul (1, 45) zur Beaufschlagung einer Expansionsstrecke (7A) mit Dampf bei überkritischen Dampfzuständen ausgelegt ist, und
das Hochdruck-Modul (1, 45) und/oder das Mitteldruck-Modul (3, 47), zur Unterstützung der Fügemittel, ein Druckmittel zum Zusammendrücken der Teile (9A, 9B, 43A, 43B) des
Innengehäuses (9, 43) aufweist, **dadurch gekennzeichnet, dass** das Druckmittel in Form eines um die Teile (43A, 43B) des Innengehäuses aufgeschrumpften Schrumpfringes (53) gebildet ist, und dass
das Hochdruckmodul (1, 45) und das Mitteldruck-Modul (3, 47) durch eine auf dem Schrumpfring (53) angeordnete Kolbenringdichtung (49) voneinander getrennt sind.

2. Kombinierte Dampfturbine (10, 20, 30) nach Anspruch 1,
**gekennzeichnet durch**
einen im Hochdruck-Modul (1) und/oder im Mitteldruck-Modul (3) zwischen Außengehäuse (11) und Innengehäuse (9) liegenden Raum (23A, 23B), der zur Bildung des Druckmittels im Betriebszustand mit hochgespanntem Dampf (25, 26, 28) beaufschlagt wird, dessen Druck höher ist als in mindestens einer Einströmung (19A, 19B) für mindestens eine der zwei Expansionsstrecken (7).

3. Kombinierte Dampfturbine (10, 20, 30) nach Anspruch 1 oder 2,
**gekennzeichnet durch**
eine mit dem Raum (23A, 23B) verbundene Zuführung (31, 33, 37) für hochgespannten Dampf (25, 26, 28) und den Raum (23A, 23B) gegen unmittelbar aus der Expansionsstrecke (7A, 7B) austretenden Dampf (25, 26, 28) dichtendes Trennmittel (27).

4. Kombinierte Dampfturbine (10) nach Anspruch 2 oder 3,
**dadurch gekennzeichnet, dass**
eine Zuführung mit einer Einströmung (19A, 19B) verbunden ist, zur Zuführung von hochgespanntem Dampf (25) in Form von Einspeisedampf.

5. Kombinierte Dampfturbine (20) nach einem der Ansprüche 2 bis 4,
**dadurch gekennzeichnet, dass**
eine Zuführung mit einem Frischdampf-Überhitzer verbunden ist, zur Zuführung von hochgespanntem Dampf (26) in Form von externem, direkt einer Frischdampf-Überhitzung entnommenem Frischdampf.

6. Kombinierte Dampfturbine (20) nach einem der Ansprüche 2 bis 5,
**dadurch gekennzeichnet, dass**
eine Zuführung (31) einen Raum (23B) des Mitteldruck-Moduls (3) mit einem Raum (23A) des Hochdruck-Moduls (1) verbindet.

7. Kombinierte Dampfturbine (30) nach einem der Ansprüche 2 bis 6,
**dadurch gekennzeichnet, dass**
eine Zuführung (35) einen Abströmbereich (21A) des Hochdruck-Moduls (1) mit einem Raum (23B) des Mitteldruck-Moduls (3) verbindet.

8. Kombinierte Dampfturbine (10, 20, 30) nach Anspruch 7,
**dadurch gekennzeichnet, dass**
die Zuführung eine interne oder externe Dampfleitung ist.

9. Kombinierte Dampfturbine (10, 20, 30) nach einem der Ansprüche 1 bis 8,
**dadurch gekennzeichnet, dass**
Kühldampf aus einem Raum (23A, 23B) auf eine Wellendichtung gegeben wird, insbesondere durch eine Bohrung im Innengehäuse und/oder eine externe Leitung.

10. Kombinierte Dampfturbine (10, 20, 30) nach einem der Ansprüche 1 bis 8,
**dadurch gekennzeichnet, dass**
das Außengehäuse (11) axial geteilt ist, wobei insbesondere eine Teilfuge im Wesentlichen in einer zur Längsachse (17) quer orientierten Ebene verläuft.

11. Kombinierte Dampfturbine (10, 20, 30) nach einem der Ansprüche 1 bis 10,
**dadurch gekennzeichnet, dass**
der hochgespannte Dampf (25, 26, 28) in Form von Kühldampf gebildet ist und zwischen Außengehäuse (11) und Innengehäuse (9) ein Kühlraum (23A, 23B) gebildet ist.

12. Kombinierte Dampfturbine (40) nach Anspruch 1,
**dadurch gekennzeichnet, dass**
das Außengehäuse (41) horizontal geteilt ist, wobei insbesondere eine Teilfuge im Wesentlichen in einer zur Längsachse (17) parallel orientierten Ebene verläuft.

13. Dampf- oder Gas- und Dampf-Turbinenanlage mit einer kombinierten Dampfturbine (10, 20, 30, 40) nach einem der vorhergehenden Ansprüche und einer Dampfturbinen-Peripherie mit einer Anzahl von Leitungs- und/oder Sammelkomponenten, die zur Beaufschlagung mit Dampf bei überkritischen Dampfzuständen ausgelegt sind.

## Claims

1. Combined steam turbine (10, 20, 30, 40) with a high-pressure module (1, 45) and an intermediate-pressure module (3, 47) in a casing (5) which is common to both modules, wherein the casing (5) has an inner housing (9, 43) encompassing two expansion sections (7) and an outer housing (11, 41) encompassing the inner housing (9, 43), and wherein the inner housing (9, 43) is formed by means of parts (9A, 9B, 43A, 43B) which are joined together with joining means, wherein the high-pressure module (1, 45) is designed for charging an expansion section (7A) with steam at supercritical steam states, and
the high-pressure module (1, 45) and/or the intermediate-pressure module (3, 47), for assisting the joining means, has a means for exerting pressure for pressing together the parts (9A, 9B, 43A, 43B) of the inner housing (9, 43), **characterized in that** the means of exerting pressure is formed in the form of a shrink ring (53) which is shrunk on around the parts (43A, 43B) of the inner housing, and **in that**
the high-pressure module (1, 45) and the intermediate-pressure module (3, 47) are separated from each other by means of a piston ring seal (49) which is arranged on the shrink ring (53).

2. Combined steam turbine (10, 20, 30) according to Claim 1, **characterized by**
a chamber (23A, 23B) which is located in the high-pressure module (1) and/or in the intermediate-pressure module (3) between outer housing (11) and inner housing (9) and which for forming the means for exerting pressure in the operating state is charged with highly pressurized steam (25, 26, 28), the pressure of which is higher than in at least one inlet (19A, 19B) for at least one of the two expansion sections (7).

3. Combined steam turbine (10, 20, 30) according to Claim 1 or 2,
**characterized by**
a feed line (31, 33, 37) for highly pressurized steam (25, 26, 28), which is connected to the chamber (23A, 23B), and separation means (27) which seal the chamber (23A, 23B) against steam (25, 26, 28) which discharges directly from the expansion section (7A, 7B).

4. Combined steam turbine (10) according to Claim 2 or 3,
**characterized in that**
a feed line is connected to an inlet (19A, 19B) for feeding highly pressurized steam (25) in the form of feed steam.

5. Combined steam turbine (20) according to one of Claims 2 to 4,
**characterized in that**
a feed line is connected to a live-steam superheater for feeding highly pressurized steam (26) in the form of external live steam which is extracted directly from a live-steam superheater.

6. Combined steam turbine (20) according to one of Claims 2 to 5,
**characterized in that**
a feed line (31) connects a chamber (23B) of the intermediate-pressure module (3) to a chamber (23A) of the high-pressure module (1).

7. Combined steam turbine (30) according to one of Claims 2 to 6,
**characterized in that**
a feed line (35) connects an outlet section (21A) of the high-pressure module (1) to a chamber (23B) of the intermediate-pressure module (3).

8. Combined steam turbine (10, 20, 30) according to Claim 7,
**characterized in that**
the feed line is an internal or external steam line.

9. Combined steam turbine (10, 20, 30) according to one of Claims 1 to 8,
**characterized in that**
cooling steam from a chamber (23A, 23B) is delivered to a shaft seal, especially through a hole in the inner housing and/or through an external line.

10. Combined steam turbine (10, 20, 30) according to one of Claims 1 to 8,
**characterized in that**
the outer housing (11) is axially split, wherein in particular a parting joint extends essentially in a plane which is orientated transversely to the longitudinal axis (17).

11. Combined steam turbine (10, 20, 30) according to one of Claims 1 to 10,
**characterized in that**
the highly pressurized steam (25, 26, 28) is formed in the form of cooling steam and a cooling chamber (23A, 23B) is formed between outer housing (11) and inner housing (9).

12. Combined steam turbine (40) according to Claim 1,
**characterized in that**
the outer housing (41) is horizontally split, wherein in particular a parting joint extends essentially in a plane which is orientated parallel to the longitudinal axis (17) .

13. Steam turbine plant, or gas and steam turbine plant, with a combined steam turbine (10, 20, 30, 40) according to one of the preceding claims, and with a steam turbine periphery with a number of piping components and/or collecting components which are designed for being charged with steam at supercritical steam states.

## Revendications

1. Turbine ( 10, 20, 30, 40 ) à vapeur combinée ayant un module ( 1, 45 ) de haute pression et un module ( 3, 47 ) de moyenne pression dans un carter ( 5 ) commun aux deux modules, le carter ( 5 ) ayant un carter ( 9, 43 ) intérieur comprenant deux sections ( 7 ) de détente et un carter ( 11, 41 ) extérieur entourant le carter ( 9, 43 ) intérieur et dans laquelle le carter ( 9, 43 ) intérieur est formé par des parties ( 9A, 9B, 43A, 43B ) réunies par des moyens de jonction,
dans laquelle le module ( 1, 45 ) de haute pression est conçu pour l'alimentation d'une section ( 7A ) de détente en vapeur pour des états de vapeur supercritiques, et
le module ( 1, 45 ) de haute et/ou le module ( 3, 47 ) de moyenne pression a, pour assister les moyens de jonction, un moyen de pression, pour comprimer ensemble les parties ( 9A, 9B, 43A, 43B ) du carter ( 9, 43 ) intérieur,
**caractérisé en ce que**
le moyen de compression est sous la forme d'une frette ( 53 ) rétreinte sur les parties ( 43A, 43B ) du carter intérieur, et **en ce que**
le module ( 1, 45 ) de haute pression et le module ( 13, 47 ) de moyenne pression sont séparés l'un de l'autre par un joint ( 49 ) à bague de piston disposé sur la frette ( 53 ).

2. Turbine ( 10, 20, 30, 40 ) à vapeur combinée suivant la revendication 1,
**caractérisée par**
un espace ( 23A, 23B ), qui se trouve dans le module ( 1 ) de haute pression et/ou dans le module ( 3 ) de moyenne pression entre le carter ( 11 ) extérieur et le carter ( 9 ) intérieur et qui, pour la formation du moyen de pression, est dans l'état de fonctionnement alimenté en vapeur ( 25, 26, 28 ) sous haute pression, dont la pression est plus haute que dans au moins un courant ( 19A, 19B ) d'afflux dans au moins l'une des deux sections ( 7 ) de détente.

3. Turbine ( 10, 20, 30, 40 ) à vapeur combinée suivant la revendication 1 ou 2,
**caractérisée par**
une amenée ( 31, 33, 37 ) reliée à l'espace ( 23A, 23B ) de vapeur ( 25, 26, 28 ) sous haute pression et par un moyen ( 27 ) de séparation rendant étanche l'espace ( 23A, 23B ) par rapport à de la vapeur ( 25, 26, 28 ) sortant directement de la section ( 7A, 7B ) de détente.

4. Turbine ( 10, 20, 30, 40 ) à vapeur combinée suivant la revendication 2 ou 3,
**caractérisée en ce que**
une amenée est reliée à un afflux ( 19A, 19B ) pour l'amenée de vapeur ( 25 ) sous haute pression sous la forme de vapeur d'alimentation.

5. Turbine ( 10, 20, 30, 40 ) à vapeur combinée suivant l'une des revendications 2 à 4,
**caractérisée en ce que**
une amenée est reliée à un surchauffeur de vapeur vive pour l'amenée de vapeur ( 26 ) surchauffée sous la forme de vapeur vive extérieure, prélevée directement d'une surchauffe de vapeur vive.

6. Turbine ( 10, 20, 30, 40 ) à vapeur combinée suivant l'une des revendications 2 à 5,
**caractérisée par**
une amenée ( 31 ) reliant un espace ( 23B ) du module ( 3 ) de moyenne pression et un espace ( 23A ) du module ( 1 ) de moyenne pression.

7. Turbine ( 10, 20, 30, 40 ) à vapeur combinée suivant l'une des revendications 2 à 6,
**caractérisée par**
une amenée ( 35 ) reliant une zone ( 21A ) de sortie du module ( 1 ) de haute pression et un espace ( 23B ) du module ( 3 ) de moyenne pression.

8. Turbine ( 10, 20, 30, 40 ) à vapeur combinée suivant la revendication 7,
**caractérisée en ce que**
l'amenée est un conduit intérieur ou extérieur pour de la vapeur.

9. Turbine ( 10, 20, 30, 40 ) à vapeur combinée suivant l'une des revendications 1 à 8,
**caractérisée en ce que**
de la vapeur de refroidissement d'un espace ( 23A, 23B ) est donnée à une garniture étanche d'arbre, notamment par un trou dans le carter intérieur et/ou par un conduit extérieur.

10. Turbine ( 10, 20, 30, 40 ) à vapeur combinée suivant l'une des revendications 1 à 8,
**caractérisée en ce que**
le carter ( 11 ) extérieur est fendu axialement, un joint partiel s'étendant, notamment sensiblement, dans un plan orienté transversalement par rapport à l'axe ( 17 ) longitudinal.

11. Turbine ( 10, 20, 30, 40 ) à vapeur combinée suivant l'une des revendications 1 à 10,
**caractérisée en ce que**
la vapeur ( 25, 26, 28 ) sous haute pression est sous la forme de vapeur de refroidissement et un espace ( 23A, 23B ) de refroidissement est formé entre le carter ( 11 ) extérieur et le carter ( 9 ) intérieur.

12. Turbine ( 10, 20, 30, 40 ) à vapeur combinée suivant la revendication 1,
**caractérisée en ce que**
le carter ( 41 ) extérieur est fendu horizontalement, un joint partiel s'étendant, notamment sensiblement, dans un plan orienté parallèlement à l'axe ( 17 ) longitudinal.

13. Installation de turbine à vapeur ou de turbine à gaz et à vapeur ayant une turbine ( 10, 20, 30, 40 ) à vapeur combinée suivant l'une des revendications précédentes et une périphérie de turbine à vapeur ayant un certain nombre d'éléments de conduite et/ou de collecte, qui sont conçus pour l'alimentation en vapeur en des états de vapeur super critiques.
